# EUROPÄISCHE PATENTANMELDUNG

(11) **EP 2 354 487 A1**
(43) Veröffentlichungstag der Anmeldung: **10.08.2011**
(21) Anmeldenummer: 10195616.7
(22) Anmeldetag: 17.12.2010
(51) Int. Cl.: F01P 9/00, F01M 5/00, F01M 11/00

(54) **Brennkraftmaschine**

(30) Priorität: 03.02.2010 DE 102010006834
(71) Anmelder: Pierburg GmbH, 41460 Neuss (DE)
(72) Erfinder: Rothgang, Stefan, 47495, Rheinberg (DE)
(74) Vertreter: Patentanwälte ter Smitten

(57) **Zusammenfassung**

Brennkraftmaschine mit einem Motorblock, mit einem Kühlmittelkreislauf, mit einer Ölwanne (16), mit einer Abgasleitung (3) und einer Abgasreinigungseinrichtung, wobei die Ölwanne (16) eine Wärmetauschereinheit mit einer Abgaswärmetauscherleitung aufweist, die vom Abgas durchströmbar ist, derart, dass das Motoröl erwärmbar ist, wobei ein Abgaszuführkanal (7) und ein Abgasrückführkanal (20) vorgesehen sind, die mit der Abgaswärmetauscherleitung (8) und einer in der Ölwanne (16) angeordneten Abgaszirkulationsleitung (10) verbunden sind, wobei die Ölwanne (16) zusätzlich einen Kühlmittelkanal (15) aufweist sowie mindestens ein thermoelektrisches Wandlerelement (12) besitzt, dass zwischen dem Kühlmittelkanal (15) und der Abgaszirkulationsleitung (10) angeordnet ist.

## Beschreibung

Die Erfindung betrifft eine Brennkraftmaschine mit einem Motorblock, mit einem Kühlmittelkreislauf, mit einer Ölwanne, mit einer Abgasleitung und einer Abgasreinigungseinrichtung, wobei die Ölwanne eine Wärmetauschereinheit mit einer Abgaswärmetauscherleitung aufweist, die vom Abgas durchströmbar ist, derart, dass das Motoröl erwärmbar und Strom generierbar ist.

Eine derartige Brennkraftmaschine ist beispielsweise aus der DE 101 07018 A1 bekannt. Eine derartige Brennkraftmaschine soll zu einer schnelleren Erwärmung des Motoröls und damit des gesamten Motors führen, wodurch Reibungsverluste im Motor verringert werden können und ein optimiertes Abgasverhalten gewährleistet werden soll. Ein derartiges Konzept war aber aufgrund der nicht vertretbaren Kosten/Nutzen-Relation bisher nur schwer vertretbar. Den Vorteilen in der relativ kurzen Startphase stehen jedoch die Nachteile einer großen Investition hinsichtlich der Ausführung der Ölwanne und ihrer Anbindung an den Motorblock gegenüber.

Der Erfindung liegt daher die Aufgabe zugrunde, eine derartige Brennkraftmaschine dahingehend zu verbessern, dass eine ganzheitliche Verwendung, das heißt eine Nutzung der Abgaswärme über die gesamte Zeit des Motorbetriebes im Bereich der Ölwanne, ermöglicht wird.

Diese Aufgabe wird dadurch gelöst, dass ein Abgaszuführkanal und ein Abgasrückführkanal vorgesehen sind, die mit der Abgaswärmetauscherleitung und einer in der Ölwanne angeordneten Abgaszirkulationsleitung verbunden sind, wobei die Ölwanne zusätzlich einen Kühlmittelkanal aufweist sowie mindestens ein thermoelektrisches Wandlerelement besitzt, dass zwischen dem Kühlmittelkanal und der Abgaszirkulationsleitung angeordnet ist.

Auf diese Weise kann das Abgas in der Brennkraftmaschine dort zeitabhängig integriert werden, wo es den größten Nutzen hervorruft. Dieser Nutzen kann eine Minderung des CO₂-Ausstoßes sein, die schnellere Erwärmung des Motoröls und damit eine Verschleißminderung, ein schnelleres Aufwärmverhalten des Innenraums sowie eine Stromgenerierung. Eine Abgaswärmenutzung mittels eines thermoelektrischen Wandlerelementes entlastet die Lichtmaschine und kann permanent in Nutzung verbleiben. Damit können auch elektrische Innenraumwärmungssysteme frühzeitig unterstützt werden.

Dabei kann in einer besonders einfachen Ausführungsform die Abgaszirkulationsleitung auch als Abgaswärmetauscherleitung in der Ölwanne nutzbar sein. Dadurch, dass jeweils eine Abgaswärmetauscherleitung und eine Abgaszirkulationsleitung vorgesehen sind, wobei auf der Abgaszirkulationsleitung mindestens ein thermoelektrisches Wandlerelement angeordnet ist, wobei auf der von der Abgaszirkulationsleitung abgewandten Seite des mindestens einen thermoelektrischen Wandlerelementes die Kühlmittelkanal angeordnet ist, kann eine einfache Trennung von Wärmetauschernutzung und Stromgenerierung vorgenommen werden.

In einer vorteilhaften Ausführung ist in der Abgasleitung zwischen dem Abgaszuführkanal und dem Abgasrückführkanal ein erstes Schaltventil angeordnet. Wenn der Abgaszirkulationsleitung ein zweites Schaltventil zugeordnet ist, ist es auf einfache Weise möglich, die Durchströmung des Abgases durch die Abgaszirkulationsleitung und die Abgaswärmetauscherleitung zu steuern. Durch die Zuordnung eines dritten Schaltventiles zur Abgaswärmetauscherleitung ist ein komplettes Verschließen der Abgaswärmetauscherleitung möglich.

Um eine Überhitzung der thermoelektrischen Wandlerelemente zu vermeiden, ist es vorteilhaft, wenn die Abgaszirkulationsleitung eine Konditioniervorrichtung aufweist. Dabei ist es vorteilhaft, wenn der Konditioniervorrichtung ein viertes Schaltventil zugeordnet ist, durch das die Konditioniervorrichtung geöffnet oder geschlossen werden kann.

In einer besonders vorteilhaften Ausführungsform können die Schaltventile als Schaltklappen ausgeführt sein.

Des Weiteren wird eine Ölwanne zur Verwendung in einer Brennkraftmaschine beansprucht, wobei die Ölwanne eine Abgaszirkulationsleitung aufweist, die mit mindestens einem thermoelektrischen Wandlerelement in Wirkverbindung steht, wobei auf der von der Abgaszirkulationsleitung abgewandten Seite des mindestens einen thermoelektrischen Wandlerelementes ein Kühlmittelkanal angeordnet ist. Dabei ist es besonders vorteilhaft, eine an der Innenseite des Ölwannengehäuses angeordnete Abgaszirkulationsleitung vorzusehen und eine Abgaswärmetauscherleitung im mit Öl gefüllten Bereich der Ölwanne vorzusehen.

Nachfolgend wird die Erfindung anhand einer bevorzugten Ausführungsform unter Bezugnahme auf die anliegende Zeichnung näher erläutert, hierbei zeigt
Figur 1 eine Prinzipskizze einer Brennkraftmaschine, anhand derer das Gesamtabgassystem dargestellt ist, und
Figur 2 eine schematische Schnittansicht einer Ölwanne.

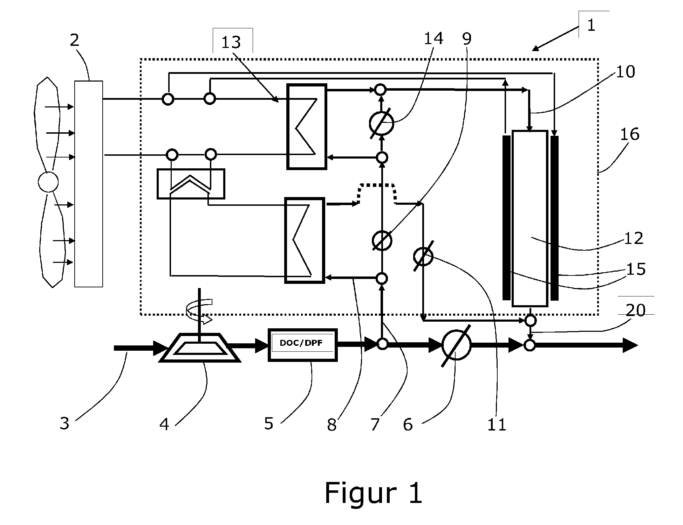

Figur 1 zeigt ein Blockschaltbild einer erfindungsgemäßen Brennkraftmaschine 1. Auf bekannte Weise wird das Abgas des Verbrennungsprozesses aus einem Brennraum 2 über eine Abgasleitung 3 einem Abgasturbolader 4 und nachfolgend einem Katalysator 5 zugeführt. Um ein kaltstartendes Fahrzeug nun schnell an einen warmen Betriebszustand heranzuführen, um ideale Bedingungen für Verschleiß und Verbrauch sicher zu stellen, ist im vorliegenden Ausführungsbeispiel eine Schaltklappe 6 vorgesehen, die in geschlossener Stellung die Verbindung zum Abgasrohr unterbricht und das Abgas zu einem Abgaszuführkanal 7 leitet, der in eine Ölwanne 16 führt. Von diesem Abgaszuführkanal 7 zweigt eine Abgaswärmetauscherleitung 8, in die das Öl bei geschlossener Stellung einer zweiten Schaltklappe 9 geführt wird, um eine schnelle Erwärmung des Motor-Getriebeöls zu gewährleisten, und eine Abgaszirkulationsleitung 10 ab. Es kommt also zum Wärmeaustausch, hier nur schematisch durch Wärmetauscher dargestellt, zwischen heißem Abgas und Öl. Um in bestimmten Lastbereichen, in dem eine ausreichende Öltemperatur vorliegt, zu gewährleisten, dass kein Abgas durch die Abgaswärmetauscherleitung 8 strömt, kann in der Abgaswärmetauscherleitung eine drittes Schaltklappe 11 angeordnet sein, das die Abgaswärmetauscherleitung 8 vollständig verschließt. Dabei ist es vorteilhaft, wenn das zweite Schaltklappe 9 und die dritte Schaltklappe 11 steuerungstechnisch gegenläufig aktuiert werden.

Im Falle einer geöffneten Schaltklappe 9 und geschlossenen Schaltklappe 11 wird das Abgas nun in der Abgaszirkulationsleitung 10 in Richtung der thermoelektrischen Wandlerelemente 12 weitergeführt. Den thermoelektrischen Elementen 11 ist jedoch eine Konditioniervorrichtung 13 vorgeschaltet, die hier auch nur schematisch als Wärmetauscher dargestellt ist und die wiederum über eine vierte Schaltklappe 14 ansteuerbar ist. Die Konditioniervorrichtung 13 hat das Ziel, eine Maximaltemperatur (beispielsweise 250°C) des Abgases zu gewährleisten, um sicher zu stellen, dass die thermoelektrischen Wandlerelemente 12 nicht zerstört werden. Die Kühlung des Abgases in der Konditioniervorrichtung 13 kann beispielsweise über Motorkühlmittel vorgenommen werden. Dabei kann das Kühlmittel über Stichbohrungen/Kanäle im Kurbelgehäuse zugeführt werden. Dann wird das Abgas durch die thermoelektrischen Wandlerelemente 12 geführt, die zwischen einem Kühlmittelkanal 15 und der Abgaszirkulationsleitung 10 angeordnet sind. Das treibende Temperaturgefälle zwischen dem Abgas mit beispielsweise 250°C und dem Kühlmittel mit Temperaturen von - 30°C beim Kaltstart bis hin zu 90°C beim betriebswarmen Motor sorgt für die Entstehung einer Spannung und eines Stroms in den thermoelektrischen Wandlerelementen 12. Das sich abkühlende Abgas verlässt schließlich über einen Abgasrückführkanal 20 die Ölwanne und strömt zurück in die Abgasleitung des Fahrzeugs, wo es den Schalldämpfern und der Umgebung zugeführt wird.

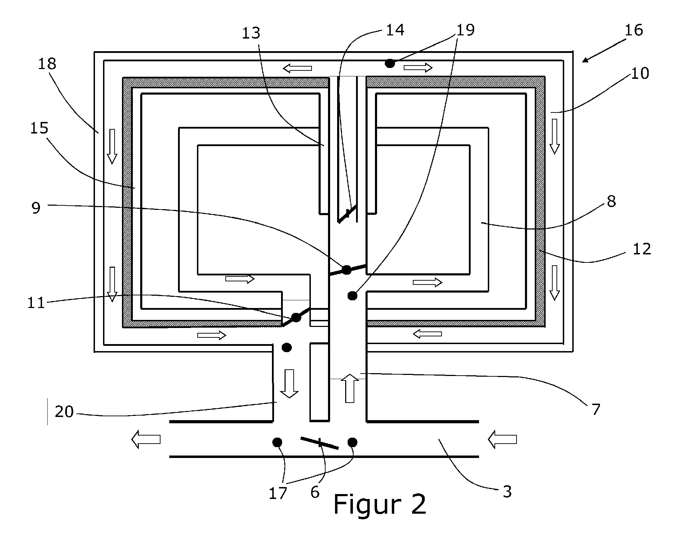

Figur 2 zeigt nun eine Ausführungsform einer erfindungsgemäßen Ölwanne 16 in Schnittansicht. Die Abgasleitung 3 weist einen Abgaszuführkanal 7 auf, die das Abgas in die Ölwanne 16 führt. Dies geschieht, wenn die erste Schaltklappe 6 geschlossen ist. Um zu hohe Gegendrücke hinsichtlich einer Turbine zu verhindern, können Drucksensoren 17 vorgesehen sein, um bei einem zu hohen Differenzdruck die erste Klappe 6 zu öffnen. Über den Abgaszuführkanal 7 tritt das Abgas in die Ölwanne 16 ein. Die Ölwanne 16 weist ein Kunststoffgehäuse oder Blechgehäuse 18 auf, an dessen Innenseite die Abgaszirkulationsleitung 10 angeordnet ist. An der vom Gehäuse 17 abgewandten Seite der Abgaszirkulationsleitung 10 sind die thermoelektrischen Wandlerelemente 12 angeordnet, an denen sich zur Innenseite hin gesehen der Kühlmittelkanal 15 anschließt.

Der Abgaszirkulationsleitung 10 ist eine zweite Schaltklappe 9 zugeordnet, die die Abgaszirkulationsleitung 10 verschließen kann und dementsprechend das Abgas durch die Abgaswärmetauscherleitung 8 führt, die im mit Öl gefüllten Bereich der Ölwanne 16 vorgesehen ist. Die Abgaswärmetauscherleitung 8 kann wie oben beschrieben eine dritte Schaltklappe 11 aufweisen, die die Wärmetauscherleitung 8 vollständig verschließt. Im Falle einer geöffneten zweiten Schaltklappe 9 wird das Abgas der Abgaszirkulationsleitung 10 zugeführt, um nachfolgend in Wechselwirkung mit den thermoelektrischen Wandlerelementen 12 Strom zu generieren. Um eine Überlastung der thermoelektrischen Wandlerelemente 12 zu vermeiden, ist im vorliegenden Beispiel eine vierte Schaltklappe 14 vorgesehen, die das Abgas im Falle einer zu hohen Temperatur einer Konditioniervorrichtung 13 zuführt. Dieses vierte Schaltventil 14 kann durch eine in der Abgaszirkulationsleitung 10 vorgesehene Temperatursensoren 19 angesteuert werden, die der Konditioniervorrichtung vor- bzw. nachgeschaltet sind. Sowohl nach Durchlauf der Abgaswärmetauscherleitung 8 als auch nach Durchlauf der Abgaszirkulationsleitung 10 wird das Abgas dem Abgasrückführkanal 20 zugeführt, um nachfolgend in die Abgasleitung 3 wieder eingeleitet zu werden. Neben der Begrenzung des Differenzdrucks über die Schaltklappe 6 ist es unter Umständen erforderlich, den Abgasmassenstrom so zu regeln, dass der Taupunkt des Abgases an keiner Stelle der Ölwanne 16 unterschritten wird. Andernfalls kommt es zu Kondensatbildung, die zu massiven Versottungen oder Korrosion führen kann. Um das zu verhindern wird ein Temperatursensor 21 eingesetzt, der die Schaltklappe 6 auch daran bemisst, dass die Temperaturuntergrenze des die Ölwanne 16 verlassenen Abgases ständig oberhalb des Taupunktes verbleibt.

Alternativ kann auch vorgesehen werden, dass ein Teil der Abgaswärmetauscherleitung gleichzeitig die Abgaszirkulationsleitung bildet. In diesem Fall wird die Abgaswärmetauscherleitung immer durchströmt, wenn Abgas zur Abgaszirkulationsleitung geführt wird.

## Patentansprüche

1. Brennkraftmaschine mit einem Motorblock, mit einem Kühlmittelkreislauf, mit einer Ölwanne, mit einer Abgasleitung und einer Abgasreinigungseinrichtung, wobei die Ölwanne eine Wärmetauschereinheit mit einer Abgaswärmetauscherleitung aufweist, die vom Abgas durchströmbar ist, derart, dass das Motoröl erwärmbar ist, **dadurch gekennzeichnet, dass** ein Abgaszuführkanal 7 und ein Abgasrückführkanal 20 vorgesehen sind, die mit der Abgaswärmetauscherleitung 8 und einer in der Ölwanne 16 angeordneten Abgaszirkulationsleitung 10 verbunden sind, wobei die Ölwanne 16 zusätzlich einen Kühlmittelkanal 15 aufweist sowie mindestens ein thermoelektrisches Wandlerelement 12 besitzt, dass zwischen dem Kühlmittelkanal 15 und der Abgaszirkulationsleitung 10 angeordnet ist.

2. Brennkraftmaschine nach Anspruch 1, **dadurch gekennzeichnet, dass** die Abgaszirkulationsleitung 10 auch als Abgaswärmetauscherleitung nutzbar ist.

3. Brennkraftmaschine nach Anspruch 1, **dadurch gekennzeichnet, dass** jeweils eine Abgaswärmetauscherleitung 8 und eine Abgaszirkulationsleitung 10 vorgesehen sind, wobei auf der Abgaszirkulationsleitung 10 mindestens ein thermoelektrisches Wandlerelement 12 angeordnet ist, wobei auf der von der Abgaszirkulationsleitung 10 abgewandten Seite des mindestens einen thermoelektrischen Wandlerelementes 12 der Kühlmittelkanal 15 angeordnet ist.

4. Brennkraftmaschine nach einem der Ansprüche 1 - 3, **dadurch gekennzeichnet, dass** in der Abgasleitung 3 zwischen dem Abgaszuführkanal 7 und dem Abgasrückführkanal 20 ein erstes Schaltventil 6 angeordnet ist.

5. Brennkraftmaschine nach Anspruch 3 oder 4, **dadurch gekennzeichnet, dass** der Abgaszirkulationsleitung 10 ein zweites Schaltventil 9 zugeordnet ist.

6. Brennkraftmaschine nach einem der Ansprüche 3 bis 5, **dadurch gekennzeichnet, dass** der Abgaswärmetauscherleitung 8 ein drittes Schaltventil 11 zugeordnet ist.

7. Brennkraftmaschine nach einem der vorhergehenden Ansprüche, **dadurch gekennzeichnet, dass** die Abgaszirkulationsleitung 10 eine Konditioniervorrichtung 13 aufweist.

8. Brennkraftmaschine nach Anspruch 7, **dadurch gekennzeichnet, dass** der Konditioniervorrichtung 13 ein viertes Schaltventil 14 zugeordnet ist.

9. Brennkraftmaschine nach einem der Ansprüche 4 bis 8, **dadurch gekennzeichnet, dass** die Schaltventile 6, 9, 11, 14 als Schaltklappen ausgeführt sind.

10. Ölwanne zur Verwendung in einer Brennkraftmaschine nach einem der Ansprüche 1 bis 9, **dadurch gekennzeichnet, dass** die Ölwanne 16 eine Abgaszirkulationsleitung 10 aufweist, die mit mindestens einem thermoelektrischem Wandlerelement 12 in Wirkverbindung steht, wobei auf der von der Abgaszirkulationsleitung 10 abgewandten Seite des mindestens einen thermoelektrische Wandlerelementes 12 ein Kühlmittelkanal 15 angeordnet ist.

11. Ölwanne nach Anspruch 10, **dadurch gekennzeichnet, dass** eine an der Innenseite des Ölwannengehäuses angeordnete Abgaszirkulationsleitung 10 vorgesehen ist und eine Abgaswärmetauscherleitung 8 im mit Öl gefüllten Bereich der Ölwanne 16 vorgesehen ist.
